# EUROPEAN PATENT SPECIFICATION

(11) **EP 4 618 514 B1**
(45) Date of publication and mention of the grant of the patent: **09.09.2026**
(21) Application number: 24163034.2
(22) Date of filing: 12.03.2024
(51) Int. Cl.: H04L 67/12

(54) **METHODS, SYSTEMS, AND COMPUTER PROGRAM PRODUCTS FOR TRANSMITTING EVENT-RELATED SENSOR DATA**
VERFAHREN, SYSTEME UND COMPUTERPROGRAMMPRODUKTE ZUR ÜBERTRAGUNG VON EREIGNISBEZOGENEN SENSORDATEN
PROCÉDÉS, SYSTÈMES ET PRODUITS-PROGRAMMES INFORMATIQUES POUR TRANSMETTRE DES DONNÉES DE CAPTEUR LIÉES À UN ÉVÉNEMENT

(43) Date of publication of application: 17.09.2025
(73) Proprietor: Helsing GmbH, 81671 Munich (DE)
(72) Inventor: ADAMS, Maxwell, 81671 Munich (DE); FINK, Robert, 81671 Munich (DE); KAMENIVSKYY, Yuriy, 81671 Munich (DE)
(74) Representative: Rummler, Felix

(56) References cited:
- US-A1- 2017 124 781
- US-A1- 2020 128 371
- US-A1- 2022 262 171
- US-B2- 10 223 911

## Description

### Technical Field

The present disclosure relates to systems, methods, and computer program products for transmitting data related to an event detected by a sensor.

### Background

A frequent problem in the field of network communications is the transmission of data over an unreliable and/or perturbed data link. For example, frequent interruptions of transmission of a data stream may hamper or even prevent analysis of the data.

A known solution includes sending data over a redundant data link. This solution requires a high bandwidth.

There is a need for systems and methods that overcome these shortcomings.

US 2022/262171 A1 describes a surveillance system for an infrastructure or vehicle. The system comprises at least two sensor modules, each configured to collect respective sensor data from a respective sensor such as a camera. The sensor modules are configured to provide the sensor data to a data network of the system which connects different modules of the system, for instance to an analysis module and/or a storage module. The analysis module is configured to detect a given or pre-set event based on sensor data of at least one sensor module. The analysis module is further configured to forward the sensor data the event detection is based on, to an output module.

### Summary

The present invention is defined in the independent claims. The dependent claims recite selected optional features.

Disclosed and claimed herein are systems, methods, and computer program products for transmitting data related to an event detected by a sensor.

A first aspect of the present disclosure relates to a computer-implemented method of transmitting data related to an event detected by a sensor. the method comprises the following steps:
- receiving, by a sensor platform comprising the sensor, sensor data from the sensor;
- detecting, by the sensor platform, one or more events within the sensor data; and
- transmitting, by the sensor platform, a transmission dataset to an interface platform communicatively coupled to the sensor platform in response to the detection of the one or more events.

The transmission dataset comprises:
- a subset of the sensor data including at least a part of the sensor data based on which the one or more events were detected; and/or
- metadata associated with the detected events.

The subset preferably comprises at least a part of the sensor data comprising the event. The event may comprise the presence of an object. Thereby, the data may be analysed by the sensor platform, where all or a larger part of the sensor data are available. The result of this processing may then be sent as metadata to the interface platform. Compared to the simpler solution of just sending all sensor data to the interface platform for analysis, this has the advantage that bandwidth is saved: It is not necessary to transmit all sensor data. Nonetheless, the interface platform obtains the analysis result and the part of the sensor data that is relevant for the analysis. The interface platform may be coupled to a computing device adapted to determine if the detection of the event was correct.

In an embodiment, the transmission dataset consists of the subset and/or the metadata. Transmitting only the subset is preferred in cases where the sensor platform is configured to detect a predetermined type of event, so that the transmitted data is limited to the underlying sensor data. Transmitting only the metadata is preferable in cases where only the detection result is of interest, in particular if the sensor platform can be trusted to correctly determine the events. Transmitting both metadata and subset is preferable in cases where it is important that the detection result can be checked at the interface platform to determine if the detection was correct. In this case, the subset of the sensor data is determined as a kind of evidence to prove correct detection by the sensor platform to the interface platform.

The method is preferred to further comprise determining, prior to transmitting the transmission dataset, a degraded and/or disrupted data connection between the sensor platform and the interface platform. In particular, it is preferred to execute the steps of detecting the one or more events and/or transmitting the transmission dataset only if the data connection is disrupted and/or degraded, and to transmit the sensor data otherwise. This allows operating the sensor platform in a first mode if the data connection is neither disrupted nor degraded, and to switch to a second mode with limited data transfer if the connection is disrupted and/or degraded, where reducing the amount of transmitted data is particularly beneficial.

In another embodiment, the transmitted metadata includes a time stamp indicative of a time when the sensor data was detected or the time of detection of the one or more events. The time stamp facilitates synchronization of the data.

In a further embodiment,
- detecting the one or more events comprises detecting one or more objects in the sensor data; and/or
- the transmission dataset is transmitted in response to the detection of one or more objects in the sensor data.

An object may include any specific content included in the sensor data, such as a spatial object, acoustic object, a signal pattern, or a special signal characteristic. The object may include an object, preferably a real-world object, indicated by a content in the sensor data, such as a vehicle or an aircraft indicated by a pixel pattern on an image. Transmitting the dataset in response to detection of an object allows using the data connection between sensor platform and the interface platform more efficiently because the transmission contains an indication that an object was detected.

In yet another embodiment, the transmitted metadata includes one or more of an object classification of one or more of the objects, and/or an object identifier related to one or more of the objects. This allows using a less computationally demanding classifier on the sensor platform. Such an algorithm may still allow obtaining highly reliable data if analysing a large part of the sensor data. The interface platform may comprise a stronger, more computationally demanding algorithm that allows checking the correctness of the classification using the more limited, transmitted data.

In another embodiment, the transmitted metadata comprise characteristics of the detected events and/or objects, such as an object size of the or a detected object. This allows distinguishing events, e.g., detections of objects of different characteristics, e.g., sizes, by the interface platform. For example, a car can be distinguished from a bus, or different captured sound patterns can be distinguished.

In a further embodiment, the computer-implemented method further comprises localizing the one or more detected events and/or objects. Localization may facilitate the detection of characteristics. For example, if a vehicle is localized on an image, its size may be better derivable from the image taking into account the location.

In a further embodiment, the metadata comprises a location reference, more preferably a geospatial reference, indicative of a location and/or velocity of the or an object. The localization may be an absolute localization, such as a georeference, or a relative localization of an event, e.g., the object detection. Transmission of both localization of events and/or objects and a time stamp enables the interface platform to calculate a velocity of an object, for example the velocity of a moving vehicle. This data (direction and speed) can then be processed to predict a future location.

In yet another embodiment, the transmission dataset is transmitted in response to localization of the or an event and/or object. This allows further saving bandwidth in cases where the localization of the event, e.g., the localisation of the detected object is the only information relevant to the interface platform.

In another embodiment, the transmitted subset includes the data based on which the events and/or objects were localized. This provides the interface platform with a means for determining whether the sensor platform has correctly localized the event and/or object.

In a further embodiment, the transmission dataset includes positional information of the detected one or more events and/or objects, preferably a distance between two detected events and/or objects. This allows determining if, e.g., an airport runway incursion is likely to result in a crash. The positional information may include relative positional information, such as a distance between events (detected objects), or absolute positional information, such as a geolocation. The positional information may be included in the subset, e.g. if a georeferenced image shows two objects, such that the distance between the objects can be derived. Alternatively or in addition, the positional information may be included in the metadata.

In yet another embodiment, the transmission dataset comprises respective locations of, and/or distances between, detected events and/or objects. The metadata may comprise the locations and/or distances is a data format that may be easily processed.

The transmission dataset comprises an algorithm identifier indicative of one or more of:
- an algorithm by which the one or more events were detected;
- an algorithm by which the one or more events and/or objects were localized;
- an algorithm by which the subset of the sensor data was generated; and/or
- an algorithm by which the metadata was generated.

The algorithm identifier may also include uncertainty values associated with particular information provided in the metadata. Transmitting said data may increase the reliability of the metadata, in particular if no sensor data subsets are transmitted.

In another embodiment, the computer-implemented method further comprises determining and transmitting an indication of an action to the interface platform and/or a further platform in response to detection and/or localization of the event and/or object. It is preferred that the determination of the action is based on the detection and/or localization of the object and/or event. This allows triggering an action by a detected object/event, such that any device coupled to the interface platform may be remotecontrolled by the method.

A second aspect of the present disclosure relates to a system comprising one or more processors and one or more storage devices, wherein the system is configured to perform the computer-implemented method of the first aspect of the present disclosure. In embodiments, the system comprises a sensor platform configured to perform the computer-implemented method of the first aspect.

A third aspect of the present disclosure relates to a computer program product for loading into a memory of the system. The computer program comprises instructions, that, when executed by a processor of the system, cause the system to execute a method of the first aspect of the present disclosure.

In an embodiment, a non-transitory computer-readable storage medium is provided that stores instructions executable by one or more processors. The instructions comprise any of the steps of a method of the first aspect of the present disclosure.

All properties and embodiments that apply to the first aspect also apply to the second and third aspects.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart depicting a computer-implemented method 100 according to an embodiment;
- Figure 2 shows a block diagram depicting systems according to embodiments; and
- Figure 3 shows a block diagram depicting data structures according to embodiments.

### Detailed description of the preferred embodiments

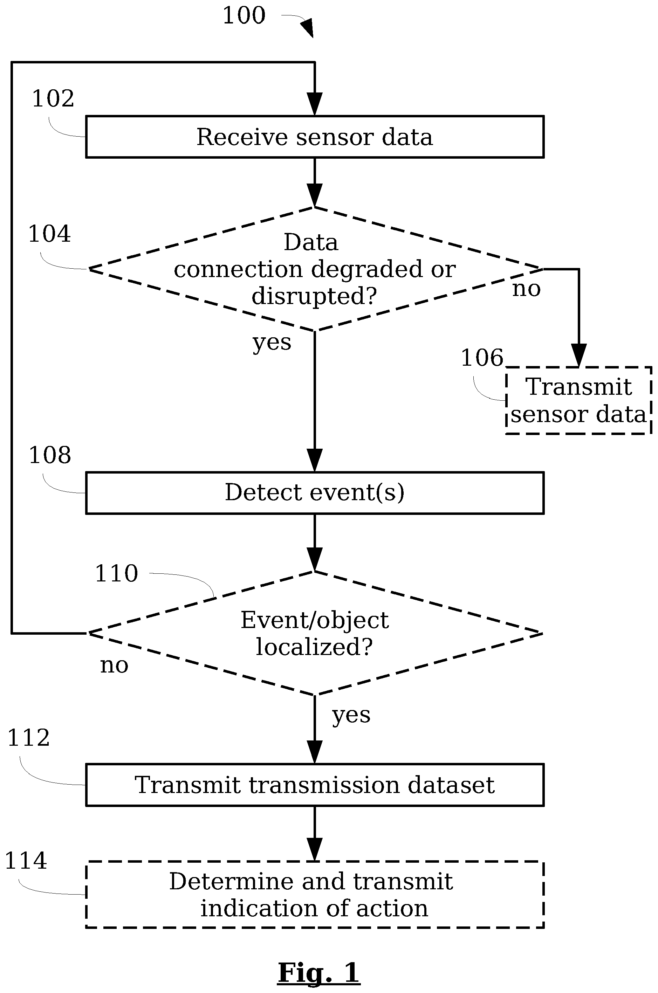

Figure 1 shows a flow chart depicting a computer-implemented method 100 according to an embodiment.

The method 100 allows transmitting data related to an event detected by a sensor platform. The method begins when the platform receives, 102, sensor data from a sensor. The sensor data may include any measured signal, such as a camera image, an acoustic recording, radiation, or a temperature.

At optional step 104, the platform determines if the data connection is degraded or disrupted. If neither degradation nor disruption is determined, the sensor data are transmitted 106 in full. Otherwise, the platform proceeds to processing at least a part of the sensor data itself to detect 108 one or more events. Determination whether the connection is degraded or disrupted preferably includes a determination of a data connection quality, such as a connection speed test and/or test of the integrity of transmitted data. The data connection quality may be expressed in a value, such as a bit rate. Comparison of the data connection quality to a predetermined threshold may lead to a determination of whether the data connection is degraded or disrupted. In that way, the amount of data transmission is reduced if needed, whilst ensuring the transmission of relevant information. In alternative embodiments, the check 104 of the data connection is omitted and the method always proceeds with event detection 108. This is preferable in cases where the connection always has a limited bit rate, and/or is shared with other devices, such that it is of interest to limit the amount of transmitted data.

An object may include any specific content included in the sensor data, such as a spatial object, an acoustic object, a signal pattern, or a special signal characteristic. Detecting an event may include determining the presence of an object. Detecting an event may further include localizing the object and/or event. Detecting an event may produce metadata, such as a time stamp indicative of when the event was detected, or an object identifier if the object was identified.

The platform may comprise a plurality of algorithms for detecting a plurality of events. For example, sensor data from a video camera may be analysed by a machine learning based image classifier that is able to detect objects on the image. At the same time, it may be analysed by, e.g., an algorithm detecting a signal-to-noise ratio (SNR) that may detect a camera malfunction of the SNR is below a predetermined threshold. However, it is also possible to apply a different algorithms that process the sensor data, preferably the same sensor data in parallel. This may be advantageous to avoid events remaining undetected. The event may include detection of a predetermined radar signal pattern, a movement of a vehicle, a collision of vehicles, a malfunction of a machine, a runway incursion of an aircraft, or damage or destruction of a vehicle.

At optional step 110, it is determined whether the event or object could be localized as part of the detection process. For example, a sensor platform comprising a radar may localize an object, such as an aircraft, by determining direction and range. If this is not the case, the method aborts without data transmission. This step is advantageous and may be included in cases where the sensor data cannot be analysed by the interface platform without the localization. In these cases, it is preferred to refrain from transmission of data to economize energy. If the data connection is shared with other devices, this also avoids unnecessary use of available bandwidth. However, localization is not required in all cases, i.e. the data may be sent irrespective thereof in different embodiments.

At step 112, the sensor platform transmits the transmission dataset to the interface platform. This provides the interface platform with information on the event or object by using a fraction of the available bandwidth for data transfer.

At optional step 114, the sensor platform determines and transmits an indication of an action to be performed. This allows remote-controlling the interface platform or another device communicatively coupled thereto.

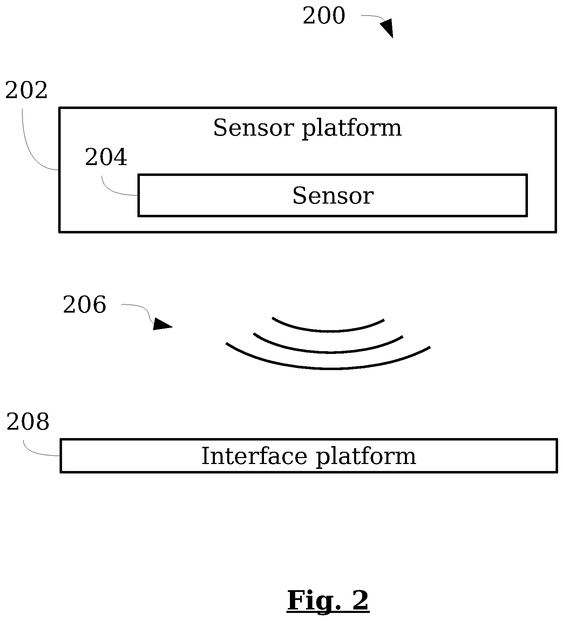

Figure 2 shows a block diagram depicting systems 200 according to embodiments.

The sensor platform 202 comprises a sensor 204 and may further comprise computing resources, such as processors and memory devices, to execute method 100. The sensor platform 202 further comprises means for transmitting the data via data connection 206 to the interface platform 208.

The platform 202 may be included in any location and/or device where sensing physical values is possible. For example, the sensor platform may be included in a sensor unit in a machine, or in an unmanned aerial vehicle, unmanned ground vehicle, or a handheld device. The sensor may be any sensor, including a camera, an acoustic sensor, and/or radar, such as imaging radar. The platform may comprise a computing device operable for analysing the sensor data, detecting the events, and generating and transmitting the transmission dataset.

The sensor 204 may include any kind of sensor. In an illustrative example, the sensor platform 202 is a surveillance platform located at an airport, and sensor 204 is a surveillance camera observing a runway. The sensor platform 202 may, in this example, send a continuous video feed of the runway to the interface platform. In case the connection is degraded or disrupted, however, the sensor platform 202 may switch to a different operation mode it which it detects predetermined objects including taxiing aircraft and/or vehicles autonomously. This may be done using a machine learning algorithm. Detection may be based on a subset of the sensor data, e.g., some seconds of the video feed. The detected objects are in this case the images of the aircraft and/or vehicles in the sensor data. This preferably includes determining size, type, and location of vehicles or aircraft In case the sensor platform 202 observes a predetermined event, such as localization of a vehicle on a part of the runway where such vehicles are not allowed to drive for safety reasons, the sensor platform 202 may then send a transmission dataset to the interface platform 208, which preferably includes an indication of a runway incursion, the location and type of vehicle, and a camera image that shows the vehicle. This enables a user of the interface platform, e.g. an air traffic controller, to verify if the detection was correct or in error, and respond appropriately. The advantage over a transmission of continuous video feed is that less data are transmitted and that data analysis is offloaded to the sensor platform 202. Since the sensor platform 202 has access to the full video feed from the camera without limitations due to the connection 206, the event detection can be done reliably based on all sensor data. In contrast, the data analysed by the interface platform are still sufficient to check if the detection of the event was correct. Thereby, the sensor platform 202 selects sensor data such that the available bandwidth of the data connection 206 is most efficiently used. In this example, it is beneficial to transmit a location of the object to allow a quick response depending on whether, e.g., a bus is observed on a part of the airport reserved to taxiing aircraft, or on a runway that is in operation.

Other use cases include acoustic surveillance of, e.g., a machine operating. In these cases, the sensor platform 202 may be configured to detect and classify the acoustic patterns of a malfunction in a machine, and transmit such an acoustic pattern along with the classification to the interface platform, so that an engineer can determine if the classification is correct.

The sensor platform 202 is communicatively connected by a data connection 206 to an interface platform 208. Data connection 206 preferably comprises a radio frequency connection. The data connection 206 may be subject to perturbation or degradation, e.g. by interfering signals in the electromagnetic spectrum. In particular, signals arriving at interface platform 208 may comprise errors, leading to a reduced effective bandwidth of the data connection 206. Moreover, data connection 206 may be shared with other devices, so that it is preferable to reduce the amount of data transmitted over the data connection 206. In alternative embodiments, another type of data connection may be provided, such as a local area network or wide area network.

The interface platform 208 is configured to receive data from the sensor platform 202, and may comprise means for processing the received data or for displaying and/or transmitting the received data to another device. The interface platform 208 may include or be comprised in a control centre tasked with surveillance of any environment captured by the sensor.

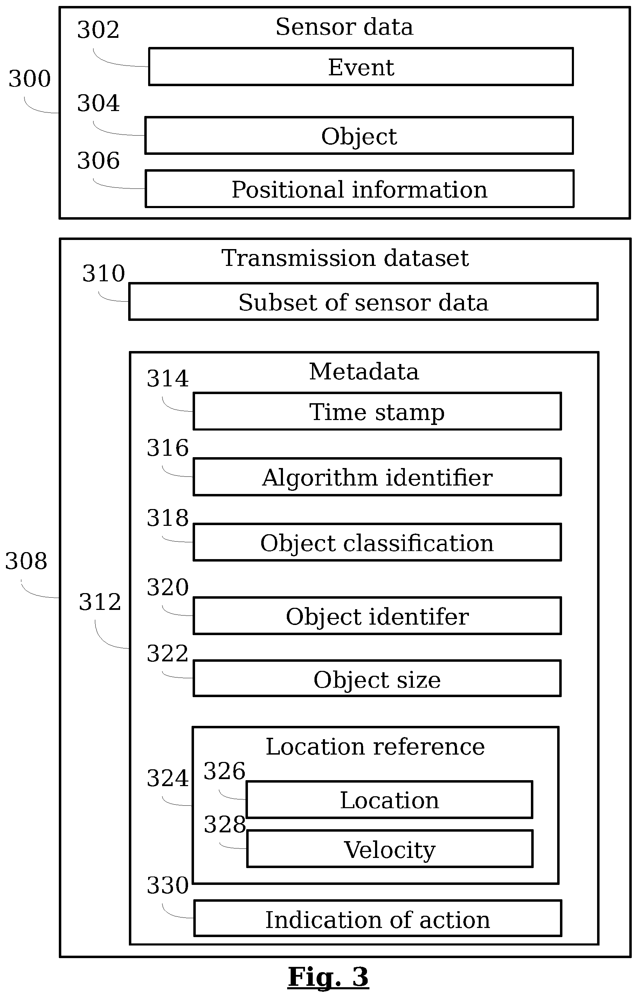

Figure 3 shows a block diagram depicting data structures according to embodiments.

The sensor data 300 is received at the sensor platform. The sensor data 300 may include spatially-dependent data, such as a camera image. The sensor data 300 may include an event 302, such as an object 304 being present in the sensor data, or first occurring in sensor data, such as a vehicle entering the scene captured by a camera. An object 304 may include any specific content of the sensor data, e.g., data indicative of a detected acoustic pattern if the sensor is a microphone, or a pixel pattern indicative of a vehicle if the sensor is a camera. The sensor data may comprise positional information 306 related to one or more objects 304, such as a location of a vehicle. Positional information includes any information that allows determining relative or absolute positions. For example, relative positional information related to two objects is included into the sensor data if the two objects are shown on the same image. Relative positional information is also included in the sensor data if there is a localized preselected anchoring object for relative comparisons, and a further object is determined and localized. An anchoring object may be preselected by a user. Its localization may be done by a user, such as by entering coordinates, or automatically.

The transmission dataset 308 includes, among other things, a subset 310 of the sensor data 300. If the sensor data 300 includes an audio feed, then the subset may include some seconds of the audio feed. If the sensor data 300 includes a video feed, then the subset may include one or more frames of the video feed. The subset is chosen such that it includes the detected event 302. For example, if the event includes presence of an object, the subset also comprises the object and may also comprise the positional information 306. In this case, the positional information 306 is transmitted even without metadata encoding such information.

The transmission dataset 308 may further comprise metadata 312. The metadata 312 are preferably generated by the sensor platform by analysis of the data.

The metadata 312 may include a time stamp 314 indicative of when the event was detected, or when a processing step related to the sensor data was made. This increases the reliability of the method 100 because the interface platform can use the time stamp 314 to cross-check data for inconsistencies, e.g., with data from other sensors.

The metadata 312 may further include an algorithm identifier 316 indicative of an algorithm, for example an image classifier, that has detected the event, or localized an object. Thereby, status information on the sensor platform is transmitted because an indication on the reliability of the algorithm can be inferred from it. The algorithm identifier 316 may include an indication of the algorithm by which the subset 310 was generated, or the metadata was generated. This increases compatibility with a plurality of interface platforms because they are provided with information on how to process the received transmission dataset.

The metadata 312 may further comprise an object classification 318. This allows, for example, determining if a vehicle on an image is a bus or a car. For example, if the sensor platform is operable for traffic surveillance, the object classification may indicate if the object is a car or a bus. If a traffic accident is detected, this may allow a quicker determination of how many ambulances should be sent.

The metadata 312 may further include an object identifier 320. This allows, e.g., determining if the same object is repeatedly detected, which is the case, inter alia, if a vehicle leaves and then re-enters the field of view of a camera, or an aircraft leaves and re-enters the range of a radar.

The metadata 312 may also comprise an object size. The object size may be determined by imaging methods, such as use of a fiducial, or by determining the spatial extent of an object on a camera (number of camera pixels), and applying a calibration.

The metadata 312 may further comprise a location reference 324. This may include an indication 326 of the location of an object on an image, for example a georeference, or a relative position of objects to one another. This preferably includes a distance between objects and/or events. The distance may be specified as a Euclidean distance between determined locations. This is advantageous in cases such as traffic accident determination, where it is more efficient to transmit the distance between vehicles, without transmitting their actual locations. The location reference 324 may include an indication 328 of a velocity, which may be derived by analysis of a plurality of image frames, or by direct velocity measurements such as Doppler radar, or a combination thereof.

The metadata 312 may further include an indication 330 of a suggested action that should be undertaken in response to an event. For example, if the sensor platform detects a plurality of defects in a machine by analysing sensor data related to the machine, the indication 330 of an action may suggest stopping the machine for maintenance. The analysis that leads to the determination of the indication 330 need therefore not be done by compute resources included in the interface platform. In case of an unreliable data connection between sensor platform and interface platform, this means that even this part of the analysis benefits from the availability of the sensor data 300 and not just a subset thereof.

### Reference signs

- 100: Computer-implemented method
- 102: Receive sensor data
- 104: Data connection degraded or disrupted?
- 108: Detect event
- 110: Localize event/object
- 112: Transmit transmission dataset
- 114: Determining and transmitting indication of action
- 202: Sensor platform
- 204: Sensor
- 206: Data connection
- 208: Interface platform
- 300: Sensor data
- 302: Detected event(s)
- 304: Detected object(s)
- 306: Positional information
- 308: Transmission dataset
- 310: Subset of sensor data
- 312: Metadata
- 314: Time stamp
- 316: Algorithm identifier
- 318: Object classification
- 320: Object identifier
- 322: Object size
- 324: Location reference
- 326: Location
- 328: Velocity
- 330: Indication of action

## Claims

1. A computer-implemented method of transmitting data related to an event detected by a sensor, the method comprising:
receiving (102), by a sensor platform (202) comprising the sensor (204), sensor data (300) from the sensor (204);
detecting (108), by the sensor platform (202), one or more events (302) within the sensor data (300); and
transmitting (112), by the sensor platform (202), a transmission dataset (308) to an interface platform (208) communicatively coupled to the sensor platform (202) in response to the detection of the one or more events (302),
wherein the transmission dataset (308) comprises:
a subset (310) of the sensor data (300) including at least a part of the sensor data (300) based on which the one or more events (302) were detected; and/or
metadata (312) associated with the one or more detected events (302),
wherein the transmission dataset (308) comprises an algorithm identifier (316) indicative of one or more of:
an algorithm by which the one or more events (302) were detected;
an algorithm by which the one or more events (302) and/or one or more objects (304) were localized;
an algorithm by which the subset (310) of the sensor data (300) was generated; and/or an algorithm by which the metadata (312) was generated.

2. The computer-implemented method of claim 1, wherein:
the transmission dataset (308) consists of the subset (310) and/or the metadata (312); and/or
the method further comprises determining (104), prior to transmitting (112) the transmission dataset (308), a degraded and/or disrupted data connection (206) between the sensor platform (202) and the interface platform (208).

3. The computer-implemented method of claim 1 or 2, wherein the metadata (312) includes a time stamp (314) indicative of a time when the sensor data (300) was detected or the time of detection of the one or more events.

4. The computer-implemented method of any of the preceding claims, wherein:
detecting the one or more detected events (302) comprises detecting one or more objects (304) in the sensor data (300); and/or
the transmission dataset (308) is transmitted in response to the detection of one or more objects (304) in the sensor data (300).

5. The computer-implemented method of claim 4, wherein the metadata (312) includes one or more of an object classification (318) of one or more of the objects (304), and/or an object identifier (320) related to one or more of the objects (304).

6. The computer-implemented method of any of the preceding claims, wherein the metadata (312) comprise characteristics of the one or more detected events (302) and/or objects (304), such as an object size (322) of the or a detected object (304).

7. The computer-implemented method of any of the preceding claims, wherein:
the method further comprises localizing (110) the one or more detected events (302) and/or objects (304); and/or
the metadata (312) comprise a location reference (324), preferably a geospatial reference indicative of a location (326) and/or velocity (328) of the or an object (304).

8. The computer-implemented method any of the preceding claims, wherein the transmission dataset (308) is transmitted in response to localization of an event and/or object among the one or more detected events (302) and/or objects (304).

9. The computer-implemented method of claim 7 or 8, wherein the subset (310) includes the data based on which the one or more detected events (302) and/or objects (304) were localized.

10. The computer-implemented method of any of the preceding claims, wherein the transmission dataset (308) includes positional information (306) of the one or more detected events (302) and/or objects (304).

11. The computer-implemented method of claim 10,
wherein the transmission dataset (308) comprises respective locations of, and/or distances between, the one or more detected events (302) and/or objects (304).

12. The method of any of the preceding claims, further comprising determining and transmitting (114) an indication (330) of an action to the interface platform and/or a further platform in response to detection and/or localization of the one or more detected events (302) and/or one or more objects (304).

13. A system comprising one or more processors and one or more storage devices, wherein the system is configured to perform the computer-implemented method of any one of claims 1-12.

14. A computer program product for loading into a memory of a computer, comprising instructions, that, when executed by a processor of the computer, cause the computer to execute a computer-implemented method of any of claims 1-12.

## Patentansprüche

1. Computerimplementiertes Verfahren zum Übertragen von Daten in Bezug auf ein von einem Sensor erfasstes Ereignis, wobei das Verfahren Folgendes beinhaltet:
Empfangen (102), durch eine den Sensor (204) umfassende Sensorplattform (202), von Sensordaten (300) von dem Sensor (204);
Erfassen (108), durch die Sensorplattform (202), eines oder mehrerer Ereignisse (302) innerhalb der Sensordaten (300); und
Übertragen (112), durch die Sensorplattform (202), eines Übertragungsdatensatzes (308) zu einer Schnittstellenplattform (208), die mit der Sensorplattform (202) kommunikativ gekoppelt ist, als Reaktion auf die Erfassung der ein oder mehreren Ereignisse (302),
wobei der Übertragungsdatensatz (308) Folgendes umfasst:
einen Teilsatz (310) der Sensordaten (300), der zumindest einen Teil der Sensordaten (300) enthält, auf deren Basis die ein oder mehreren Ereignisse (302) erfasst wurden; und/oder
Metadaten (312), die mit den ein oder mehreren erfassten Ereignissen (302) assoziiert sind,
wobei der Übertragungsdatensatz (308) eine Algorithmuskennung (316) umfasst, die eines oder mehrere angibt von:
einem Algorithmus, mit dem die ein oder mehreren Ereignisse (302) erfasst wurden;
einem Algorithmus, mit dem die ein oder mehreren Ereignisse (302) und/oder ein oder mehrere Objekte (304) lokalisiert wurden;
einem Algorithmus, mit dem der Teilsatz (310) der Sensordaten (300) erzeugt wurde; und/oder
einem Algorithmus, mit dem die Metadaten (312) erzeugt wurden.

2. Computerimplementiertes Verfahren nach Anspruch 1, wobei:
der Übertragungsdatensatz (308) aus dem Teilsatz (310) und/oder den Metadaten (312) besteht; und/oder
das Verfahren ferner das Bestimmen (104), vor dem Übertragen (112) des Übertragungsdatensatzes (308), einer beeinträchtigten und/oder unterbrochenen Datenverbindung (206) zwischen der Sensorplattform (202) und der Schnittstellenplattform (208) beinhaltet.

3. Computerimplementiertes Verfahren nach Anspruch 1 oder 2, wobei die Metadaten (312) einen Zeitstempel (314) enthalten, der einen Zeitpunkt der Erfassung der Sensordaten (300) oder den Zeitpunkt der Erfassung der ein oder mehreren Ereignisse angibt.

4. Computerimplementiertes Verfahren nach einem der vorherigen Ansprüche, wobei:
das Erfassen der ein oder mehreren erfassten Ereignisse (302) das Erfassen eines oder mehrerer Objekte (304) in den Sensordaten (300) beinhaltet; und/oder
der Übertragungsdatensatz (308) als Reaktion auf die Erfassung eines oder mehrerer Objekte (304) in den Sensordaten (300) übertragen wird.

5. Computerimplementiertes Verfahren nach Anspruch 4, wobei die Metadaten (312) eines oder mehrere von einer Objektklassifizierung (318) eines oder mehrerer der Objekte (304) und/oder einer auf eines oder mehrere der Objekte (304) bezogenen Objektkennung (320) umfassen.

6. Computerimplementiertes Verfahren nach einem der vorherigen Ansprüche, wobei die Metadaten (312) Charakteristiken der ein oder mehreren erfassten Ereignisse (302) und/oder Objekte (304) wie beispielsweise eine Objektgröße (322) des oder eines erfassten Objekts (304) umfassen.

7. Computerimplementiertes Verfahren nach einem der vorherigen Ansprüche, wobei:
das Verfahren ferner das Lokalisieren (110) der ein oder mehreren erfassten Ereignisse (302) und/oder Objekte (304) beinhaltet; und/oder
die Metadaten (312) eine Ortsreferenz (324) umfassen, vorzugsweise eine georäumliche Referenz, die einen Ort (326) und/oder eine Geschwindigkeit (328) des oder eines Objekts (304) angibt.

8. Computerimplementiertes Verfahren nach einem der vorherigen Ansprüche, wobei der Übertragungsdatensatz (308) als Reaktion auf die Lokalisierung eines Ereignisses und/oder Objekts unter den ein oder mehreren erfassten Ereignissen (302) und/oder Objekten (304) übertragen wird.

9. Computerimplementiertes Verfahren nach Anspruch 7 oder 8, wobei der Teilsatz (310) die Daten enthält, auf deren Basis die ein oder mehreren erfassten Ereignisse (302) und/oder Objekte (304) lokalisiert wurden.

10. Computerimplementiertes Verfahren nach einem der vorherigen Ansprüche, wobei der Übertragungsdatensatz (308) Positionsinformationen (306) der ein oder mehreren erfassten Ereignisse (302) und/oder Objekte (304) enthält.

11. Computerimplementiertes Verfahren nach Anspruch 10,
wobei der Übertragungsdatensatz (308) jeweilige Orte von und/oder Abstände zwischen den ein oder mehreren erfassten Ereignissen (302) und/oder Objekten (304) umfasst.

12. Verfahren nach einem der vorherigen Ansprüche, das ferner das Bestimmen und Übertragen (114) einer Angabe (330) einer Aktion zu der Schnittstellenplattform und/oder einer weiteren Plattform als Reaktion auf die Erfassung und/oder Lokalisierung der ein oder mehreren erfassten Ereignisse (302) und/oder ein oder mehreren Objekte (304) umfasst.

13. System, das einen oder mehrere Prozessoren und ein oder mehrere Speichergeräte umfasst, wobei das System zum Durchführen des computerimplementierten Verfahrens nach einem der Ansprüche 1 bis 12 konfiguriert ist.

14. Computerprogrammprodukt zum Laden in einen Speicher eines Computers, das Befehle umfasst, die bei Ausführung durch einen Prozessor des Computers den Computer zum Ausführen eines computerimplementierten Verfahrens nach einem der Ansprüche 1-12 veranlassen.

## Revendications

1. Procédé mis en œuvre par ordinateur pour l'émission de données liées à un événement détecté par un capteur, le procédé comprenant les étapes consistant à :
recevoir (102), par une plateforme de capteur (202) comprenant le capteur (204), des données de capteur (300) en provenance du capteur (204) ;
détecter (108), par la plateforme de capteur (202), un ou plusieurs événements (302) au sein des données de capteur (300) ; et
émettre (112), par la plateforme de capteur (202), un ensemble de données d'émission (308) vers une plateforme d'interface (208) couplée en communication à la plateforme de capteur (202) en réponse à la détection des un ou plusieurs événements (302),
l'ensemble de données d'émission (308) comprenant :
un sous-ensemble (310) des données de capteur (300) comprenant au moins une partie des données de capteur (300) sur la base de laquelle les un ou plusieurs événements (302) ont été détectés ; et/ou
des métadonnées (312) associées aux un ou plusieurs événements détectés (302),
l'ensemble de données d'émission (308) comprenant un identifiant d'algorithme (316) indiquant un ou plusieurs algorithmes parmi :
un algorithme au moyen duquel les un ou plusieurs événements (302) ont été détectés ;
un algorithme au moyen duquel les un ou plusieurs événements (302) et/ou un ou plusieurs objets (304) ont été localisés ;
un algorithme au moyen duquel le sous-ensemble (310) des données de capteur (300) a été généré ; et/ou
un algorithme au moyen duquel les métadonnées (312) ont été générées.

2. Procédé mis en œuvre par ordinateur selon la revendication 1,
l'ensemble de données d'émission (308) étant constitué du sous-ensemble (310) et/ou des métadonnées (312) ; et/ou
le procédé comprenant en outre l'étape consistant à déterminer (104), avant l'émission (112) de l'ensemble de données d'émission (308), une connexion de données (206) dégradée et/ou interrompue entre la plateforme de capteur (202) et la plateforme d'interface (208).

3. Procédé mis en œuvre par ordinateur selon la revendication 1 ou 2, les métadonnées (312) comprenant un horodatage (314) indiquant un moment où les données de capteur (300) ont été détectées ou le moment de détection des un ou plusieurs événements.

4. Procédé mis en œuvre par ordinateur selon l'une quelconque des revendications précédentes,
la détection des un ou plusieurs événements détectés (302) comprenant l'étape consistant à détecter un ou plusieurs objets (304) dans les données de capteur (300) ; et/ou
l'ensemble de données d'émission (308) étant émis en réponse à la détection d'un ou plusieurs objets (304) dans les données de capteur (300).

5. Procédé mis en œuvre par ordinateur selon la revendication 4, les métadonnées (312) comprenant un ou plusieurs éléments parmi une classification d'objets (318) d'un ou plusieurs des objets (304) et/ou un identifiant d'objet (320) lié à un ou plusieurs des objets (304).

6. Procédé mis en œuvre par ordinateur selon l'une quelconque des revendications précédentes, les métadonnées (312) comprenant des caractéristiques des un ou plusieurs événements détectés (302) et/ou des un ou plusieurs objets (304), comme une taille d'objet (322) du ou d'un objet détecté (304).

7. Procédé mis en œuvre par ordinateur selon l'une quelconque des revendications précédentes,
le procédé comprenant en outre l'étape consistant à localiser (110) les un ou plusieurs événements détectés (302) et/ou les un ou plusieurs objets (304) ; et/ou
les métadonnées (312) comprenant une référence de localisation (324), de préférence une référence géospatiale indiquant une localisation (326) et/ou une vitesse (328) du ou d'un objet (304).

8. Procédé mis en œuvre par ordinateur selon l'une quelconque des revendications précédentes, l'ensemble de données d'émission (308) étant émis en réponse à la localisation d'un événement et/ou d'un objet parmi les un ou plusieurs événements détectés (302) et/ou les un ou plusieurs objets (304).

9. Procédé mis en œuvre par ordinateur selon la revendication 7 ou 8, le sous-ensemble (310) comprenant les données sur la base desquelles les un ou plusieurs événements détectés (302) et/ou les un ou plusieurs objets (304) ont été localisés.

10. Procédé mis en œuvre par ordinateur selon l'une quelconque des revendications précédentes, l'ensemble de données d'émission (308) comprenant des informations de position (306) des un ou plusieurs événements détectés (302) et/ou des un ou plusieurs objets (304).

11. Procédé mis en œuvre par ordinateur selon la revendication 10,
l'ensemble de données d'émission (308) comprenant des localisations respectives des un ou plusieurs événements détectés (302) et/ou des un ou plusieurs objets (304), et/ou des distances entre ceux-ci.

12. Procédé selon l'une quelconque des revendications précédentes, comprenant en outre les étapes consistant à déterminer et à émettre (114) une indication (330) d'une action vers la plateforme d'interface et/ou vers une autre plateforme en réponse à la détection et/ou à la localisation des un ou plusieurs événements détectés (302) et/ou des un ou plusieurs objets (304).

13. Système comprenant un ou plusieurs processeurs et un ou plusieurs dispositifs de stockage, le système étant configuré pour réaliser le procédé mis en œuvre par ordinateur selon l'une quelconque des revendications 1 à 12.

14. Produit-programme informatique destiné à être chargé dans une mémoire d'un ordinateur, comprenant des instructions qui, lorsqu'elles sont exécutées par un processeur de l'ordinateur, amènent l'ordinateur à exécuter un procédé mis en œuvre par ordinateur selon l'une quelconque des revendications 1 à 12.
